# EUROPEAN PATENT APPLICATION

(11) **EP 2 415 982 A1**
(43) Date of publication of application: **08.02.2012**
(21) Application number: 11176254.8
(22) Date of filing: 02.08.2011
(51) Int. Cl.: F01N 3/023, F01N 3/029, B01D 41/04

(54) **Apparatus and method for regenerating particulate filters for internal combustion engines**

(30) Priority: 03.08.2010 IT MI20101476
(71) Applicant: Ecospray Technologies S.r.l., 27058 Voghera (IT)
(72) Inventor: Archetti, Maurizio, 6653 Verscio (CH)
(74) Representative: Lualdi, Lorenzo

(57) **Abstract**

The present invention relates to a method for regenerating particulate filters for reduction of harmful emissions of exhaust gases from internal combustion engines, and an apparatus for carrying out said method.
The method according to the present invention envisages nebulizing, by means of a suitable nozzle and by pulsed injection, a suitable amount of oxidizing reagent in aqueous solution directly onto the filtering surface of the particulate filter, in such a way that droplets of average diameter below 500 micron reach the filtering surface in the liquid state. The present invention further relates to an apparatus for carrying out said method.

## Description

The present invention relates to a method and apparatus for regenerating anti-particulate filters, used for example for reducing the harmful emissions of exhaust gases of internal combustion engines.

As is known, the term particulate, indicated with the abbreviation PM (particulate matter) or DPM (diesel particulate matter), identifies all substances suspended in air (fibres, carbon particles, metals, silica, liquid or solid pollutants), and this therefore represents the pollutant that is now considered to have the greatest impact in urban areas. It is composed of all the solid and liquid particles dispersed in the atmosphere, with a diameter ranging from a few nanometres up to 500 micron or more (i.e. from billionths of a metre to half a millimetre).

Particulates are responsible for the black smoke that is traditionally associated with vehicles operating with a diesel cycle, and together with oxides of nitrogen represent the most harmful combustion product dispersed into the atmosphere by diesel engines.

To eliminate the PM emitted by diesel engines, installation of an anti-particulate filter on the gas discharge line is known. These anti-particulate filters can be composed of monolithic ceramics with wall flow, ceramic fibres, ceramic foams, metallic fibres, sintered metals and so on.

During operation of the filter, the PM is collected on the filtering surface and inside the matrix supporting said surface, accumulating over time and generating an ever increasing pressure loss until it causes more or less pronounced obstruction of the anti-particulate filter itself. Obstruction of the filter causes, in addition to deterioration of the filtration performance of said filter, malfunctioning of the engine through incorrect discharge of the exhaust gases.

To avoid these drawbacks and always maintain high efficiency both of the anti-particulate filter and of the engine itself, the PM that accumulates in the anti-particulate filter must be removed periodically and eliminated by a process of regeneration.

Currently, various methodologies are known for regenerating anti-particulate filters. Among these methodologies we may mention adding a reagent to the fuel to lower the point of self-ignition of the particulate matter and increase the rate of oxidation of said particulate matter at low temperatures. Oxidation of the particulate matter leads to its elimination.

Another known methodology comprises nebulizing and then evaporating a reagent in the exhaust system for the time required for reduction of the particulate matter on the filter.

Yet another known methodology for elimination of the particulate matter from the filter envisages raising the temperature of the exhaust gases for a relatively short time with the aim of raising the temperature of said particulate matter deposited on the ceramic matrix of the filter to a temperature above the ignition point with consequent combustion thereof.

However, these solutions of a known type leave some drawbacks unresolved, which the present invention proposes to resolve.

A first drawback is that the methods presented above, with the exception of the system with raising the temperature of the exhaust gases in order to achieve self-ignition of the particulate matter, generally are not efficient enough to provide safe, reliable and repeatable regeneration.

The method of raising the temperature of the exhaust gases has the following disadvantages:
- High fuel consumption
- Thermal shocks and breakages of the ceramic matrix (a particularly important problem for filters installed on large engines and for revamping existing engines), due to sudden self-ignition of a large amount of unburnt products simultaneously with a high temperature of the charging gases.

The main problem to be solved by the present invention is thus to eliminate or reduce the drawbacks of the methods of regeneration of anti-particulate filters known from the prior art.

In connection with this problem, the purpose of the present invention is thus to provide a method for the regeneration of anti-particulate filters that is characterized by extremely high efficiency of cleaning of said filter, precise control of the initial phase and the end of regeneration and reduction of thermal shocks and of overheating of the filter, avoiding damaging the latter.

Another advantage of the method according to the present invention comprises the use of oxidizing agents that are completely harmless to the environment such as H₂O₂ (hydrogen peroxide).

Yet another aim of the present invention is to provide apparatus capable of carrying out the method of regeneration in question.

This problem and these and other aims that will become clearer later are achieved by a method for regenerating an anti-particulate filter using an aqueous mixture containing an oxidizing reagent (in particular hydrogen peroxide and/or chlorate but not limited to these), characterized in that it comprises a nebulization step of said mixture of oxidizing reagent on said anti-particulate filter, the mixture reaching the anti-particulate filter in the liquid state in the form of droplets.

Moreover, these aims and objectives are achieved with apparatus for regenerating an anti-particulate filter by means of an oxidizing chemical reagent, characterized in that it comprises a nebulizer nozzle for nebulizing an aqueous solution of oxidizing reagent directly on the filtering surface of said anti-particulate filter, and in that said nebulization is carried out by pulsed injection of a high flow rate of solution in a short time, so that said solution impinges on the anti-particulate filter in the form of droplets in the liquid state.

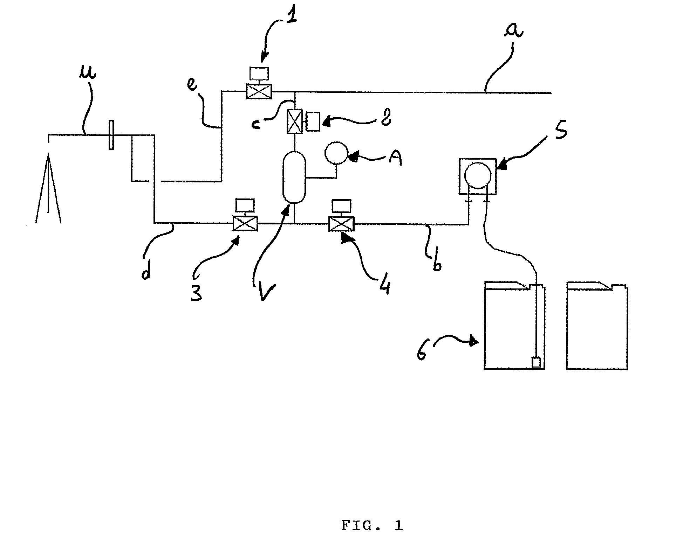

Further characteristics and advantages of the present invention will become clearer from the following detailed description, given for purposes of illustration and non-limiting, and illustrated in the appended Fig. 1, which shows a schematic of the apparatus for regenerating anti-particulate filters according to the present invention.

According to a preferred embodiment of the present invention, illustrated in the aforementioned figure as a non-limiting example, it comprises an accumulation tank V of the reagent solution installed on a line c provided with an automatic valve 2 upstream of said accumulation tank V, a compressed air line "a" that conveys air under pressure to line c and, via an automatic valve 1 to a line e directly connected to the discharge line and to the nozzle u, an oxidizing reagent supply line that conveys, via an automatic valve 4, the oxidizing reagent to the accumulation tank V and, via an automatic valve 3 to the discharge line and to the nozzle u, where it is reconnected to the line e for compressed air.

The operation of the apparatus shown schematically in Fig. 1 is as follows. Initially, the accumulation tank V for the oxidizing reagent is empty.

By means of a metering pump 5, and on opening the optional intercepting valve 4, the oxidizing reagent passes through line b from the storage tank 6 to the accumulation tank V, since the intercepting valve 3 located downstream of the intersection with line c is kept closed.

The intercepting valve 4 is optional, in that with some types of pumps 5 it is not necessary, as the pump itself prevents return of the fluid along line b.

Owing to the presence of suitable sensing means A, consisting for example of a pressure sensor or of any sensor able to ascertain partial or complete filling of the accumulation tank V, filling is stopped when the desired filling level has been reached.

At this point, the intercepting valve 4 on line b is closed, if said valve is present, and the intercepting valve 2 is opened, allowing the compressed air present in line "a" to reach, via line c, the accumulation tank V.

After the air under pressure reaches the accumulation tank V, valves 1 and 3 are opened and both the compressed air received from line "a" and the reagent are sent to the nebulizer nozzle u through lines e and d respectively.

The amount of solution of oxidizing reagent injected is thus equal to that contained in the accumulation tank V and injection takes place in a very short time, normally 4-6 seconds for a flow of 2 or 3 litres, and at the maximum for 30 seconds depending on the setting selected, the type of engine, the distance from the nozzle to the anti-particulate filter, the amount of particulate matter accumulated on the filter and so on.

Removal of the particulate matter thus takes place owing to the nebulization of an oxidizing chemical reagent, in solution in water, on the surface of the anti-particulate filter. The solution of water and oxidizing reagent is able to regenerate the filter, removing unburnt particles from it and thus avoiding clogging of said filter.

Depending on what is preferred, the concentration of the reagent in water can vary from 5% to 75%. Moreover, the use of hydrogen peroxide as reagent is preferred for the method of regeneration according to the present invention.

The apparatus described above is thus able to execute an injection procedure of the pulsed type that comprises spraying of the oxidizing agent at a high flow rate and for a short time (less than 30 seconds) with the engine in operation and with the temperature of the exhaust gases above 150 degrees Celsius.

The high instantaneous flow rate of reagent prevents it evaporating in the hot gas. The reagent is nebulized by the spraying nozzle and thus for the most part reaches the anti-particulate filter in the form of extremely numerous minute droplets of liquid, without said droplets evaporating. In this way, owing to the liquid form and the large number of small drops, the reagent is distributed on the ceramic anti-particulate filter uniformly, reaching even the narrowest channels. The reagent is nebulized by a suitable nozzle with compressed air or with fluid only (in this second case, line e is not present) installed very close to the anti-particulate filter. It is preferable, according to the apparatus that is also an object of the present invention, for said nebulizer nozzle to be positioned at a distance not greater than 50 cm relative to the filter, and for the spray angle to be designed to cover the whole filtering surface.

Accordingly, the preferred oxidizing reagent consists of hydrogen peroxide. In every case the reagent is always in solution in water, and therefore the apparatus according to the present invention can be used for nebulizing, in the form of extremely fine droplets, various reagents, always in solution in water.

The desired result, namely succeeding in depositing the oxidizing reagent on the surface of the filter in the form of small drops, of diameter even less than 500 micron, without the latter evaporating under the effect of the high temperature, is obtained chiefly owing to the extremely high instantaneous flow rate that is obtained owing to the pulsed injection that the apparatus according to the present invention as described above is able to perform. The distance from the nozzle to the filter is also an important parameter for avoiding evaporation of the reagent before it is deposited on the filter.

When the flow of aqueous solution of reagent impinges on the particulate matter obstructing the filter, the particulate matter is wetted by the solution and then is oxidized gradually once the temperature of the gas heats said particulate matter. Wetting of the particulate matter deposited on the filter surface alters its state chemically, making it amenable to very effective oxidation as soon as its temperature is above 150 degrees Celsius.

In this way oxidation is gradual and begins at a temperature of the particulate matter far lower than is required by the methods of regeneration known from the prior art, thus avoiding the dangers of overheating of the anti-particulate filter due to attainment of the high regeneration temperatures, avoiding breakages and damage of the ceramic or metallic matrix of said filter.

It has thus been shown that the method and apparatus according to the present invention achieve the purpose and the proposed objects.

In particular, it has been illustrated how the method of regeneration according to the present invention makes it possible to optimize the regeneration process, obtaining more effective oxidation of the particulate matter, which allows regeneration at lower temperatures than those commonly used by the methodologies known from the prior art.

Numerous changes can be made by a person skilled in the art without departing from the scope of protection of the present invention.

The scope of protection of the claims therefore should not be limited by the illustrations or by the preferred embodiments shown as examples in the description, but rather the claims must comprise all the characteristics of patentable novelty deducible from the present invention, including all characteristics that would be treated as equivalent by a person skilled in the art.

## Claims

1. A method for the regeneration of an anti-particulate filter by means of the use of an aqueous mixture containing an oxidizing reagent, **characterized in that** it comprises a nebulization step of said oxidizing reagent mixture on said anti-particulate filter, the mixture reaching the anti-particulate filter in liquid state in the form of droplets.

2. The method according to the preceding claim, **characterized in that** said droplets have an average diameter of less than 500 micron.

3. The method according to the preceding claim, **characterized in that** said nebulization step of said mixture containing the oxidizer takes place through pulsed injection of a high instantaneous flow rate to a nebulizer nozzle (u) positioned upstream with respect to said anti-particulate filter with a spray angle such that it is able to hit the entire filtering surface and at a distance of less than 50 cm.

4. The method according to the preceding claim, **characterized in that** said flow rate is around 2 or 3 litres in less than 30 seconds.

5. The method according to one or more of the preceding claims, **characterized in that** said oxidizing reagent is hydrogen peroxide.

6. The method according to one or more of the preceding claims, **characterized in that** said pulsed injection is obtained through discharge, through said nebulizer nozzle (u), of a volume of oxidizing reagent in aqueous solution previously accumulated in an accumulation tank (V) from which it is ejected through the introduction of compressed air.

7. Apparatus for regeneration of an anti-particulate filter through the use of a chemical oxidizing reagent, **characterized in that** it comprises a nebulizer nozzle (u) adapted to nebulize an aqueous solution of oxidizing reagent directly on the filtering surface of said anti-particulate filter, and **in that** it performs said nebulization by means of pulsed injection of a high flow rate of solution in a short time, so that said solution hits the anti-particulate filter in the form of droplets in liquid state.

8. The apparatus according to the preceding claim, **characterized in that** it comprises an accumulation tank (V) for accumulation of the aqueous solution of oxidizing reagent, a first hydraulic line (a) for conveying compressed air, said first line (a) being in turn connected, through a valve (2), to said accumulation tank (V), and also comprising a second hydraulic line (d) adapted to convey said aqueous solution of oxidizing reagent from a storage tank (6) to said accumulation tank (V), and at least one line (d) provided with a shut-off valve (3) adapted to convey the flow of aqueous solution of oxidizing reagent flowing out of said accumulation tank (V) toward said nebulizer nozzle (u).

9. The apparatus according to the preceding claim, **characterized in that** it also comprises sensor means (A) connected to said accumulation tank (V) and adapted to determine the level of filling of said accumulation tank.

10. The apparatus according to one or more of the preceding claims, **characterized in that** said accumulation tank (V) has a volume of around 3 litres, and **in that** said compressed air is introduced into said accumulation tank at pressure of around 4 bar.
